(19) Europäisches Patentamt

European Patent Office

Office européen des brevets

(11) **EP 0 710 815 A2**

(12) **EUROPÄISCHE PATENTANMELDUNG**

(43) Veröffentlichungstag:
08.05.1996 Patentblatt 1996/19

(51) Int. Cl.[6]: **G01B 7/28**

(21) Anmeldenummer: 95114389.0

(22) Anmeldetag: **13.09.1995**

(84) Benannte Vertragsstaaten:
**DE FR IT**

(30) Priorität: **02.11.1994 DE 4439013**

(71) Anmelder: **KRUPP POLYSIUS AG**
**D-59269 Beckum (DE)**

(72) Erfinder:
- **Abel, Paul, Dipl.-Ing.**
**(DE)**
- **Deventer, Bernhard, Dipl.-Ing.**
**D-48165 Münster (DE)**

(74) Vertreter: **Tetzner, Volkmar, Dr.-Ing. Dr. jur. et al**
**Van-Gogh-Strasse 3**
**D-81479 München (DE)**

(54) **Verfahren zur Überprüfung des Evolventenprofils eines Verzahnungselementes**

(57)    Die Erfindung betrifft ein Verfahren zur Überprüfung des Evolventenprofils eines Verzahnungselementes, wobei ausgehend von einem Bezugspunkt wenigstens eine Zahnflanke eines zu überprüfenden Zahnes mit einem Meßtaster abgetastet wird und die dabei ermittelten Koordinaten mit den Koordinaten des theoretischen Evolventenprofils verglichen werden. Dabei wird als Bezugspunkt der Schnittpunkt der Mittelachse des zu überprüfenden Zahnes mit dem Kopfkreis des Verzahnungselementes gewählt.

EP 0 710 815 A2

## Beschreibung

Die Erfindung betrifft ein verfahren zur Überprüfung des Evolventenprofils eines Verzahnungselementes, wobei ausgehend von einem Bezugspunkt wenigstens eine Zahnflanke eines zu überprüfenden Zahnes mit einem Meßtaster abgetastet wird und die dabei ermittelten Koordinaten mit den Koordinaten des theoretischen Evolventenprofils verglichen werden.

Aus der Praxis ist ein Meßgerät bekannt, das die Durchführung von Profilmessungen an Zahnrädern ermöglicht. Es besteht im wesentlichen aus einer Tasteinheit und einer Steuereinheit, wobei die Tasteinheit mit Nivellierhilfsmitteln an der Verzahnung eingerichtet wird. Die Tasteinheit enthält einen elektronischen Meßtaster, einen Kreuzschlitten mit zweiachsigem, inkrementalem Wegmeß-System sowie eine Bedienungsstation für die Steuerung beim Einrichten. Ist das zu prüfende Verzahnungselement horizontalachsig angeordnet, wird die Tasteinheit auf das Verzahnungselement aufgesetzt, wobei zur Positionierung zwei Kugelbolzen vorgesehen sind, die in zwei Zahnlükken eingreifen. Eine gerade Anzahl von Zähnen zwischen den Kugelbolzen bedeutet für das Gerät ein Messen in einer Zahnlücke, während eine ungerade Zähneanzahl das Messen an einem Zahn ermöglicht. Durch die beiden Kugelbolzen ist gewährleistet, daß eine der beiden Bewegungsrichtungen des Kreuzschlittens senkrecht zur Mittelachse des zu prüfenden Zahnes bzw. der zu prüfenden Zahnlücke verläuft.

In einer ersten Phase des Meßablaufs orientiert sich die Steuereinheit, d. h. es wird die Position des Meßtasters in dem durch den Kreuzschlitten vorgegebenen X/Y-Koordinatensystem bestimmt, wobei der Koordinatennullpunkt im Schnittpunkt der X/Y-Ebene mit der Achse des Verzahnungselements liegt. Die Schlüsselgröße für die Bestimmung des Meßtasters im X/Y-Koordinatensystem ist das Sehnenmaß zwischen den beiden Kugelbolzen, das durch das Wegmeß-System inkremental erfaßt wird. In der zweiten Phase, der eigentlichen Messung, wird der Meßtaster am Zahnprofil entlang geführt, so daß die Koordinaten der Zahnflanken ermittelt werden. Schließlich entsteht das Zahnflankendiagramm durch Vergleich zwischen den gemessenen Koordinaten und den Koordinaten der theoretischen Evolvente, die durch das Zentrum des Meßtasters in einer Stellung E verläuft, bei der sich der Meßtaster in der Mitte zwischen Fußkreis und Kopfkreis an der zu überprüfenden Zahnflanke befindet.

Dieses bekannte Meßgerät weist aufgrund der beiden Kugelbolzen und des damit verbundenen inkrementalen Wegmeßsystems große Abmessungen und ein relativ hohes Gewicht auf.

Der vorliegenden Erfindung liegt daher die Aufgabe zugrunde, ein Verfahren gemäß dem Oberbegriff des Anspruches 1 zu entwickeln, daß einen vergleichsweise geringeren konstruktiven Aufwand der Meßvorrichtung erfordert.

Erfindungsgemäß wird diese Aufgabe dadurch gelöst, daß der Bezugspunkt als Schnittpunkt der Mittelachse eines Zahnes mit dem Kopfkreis des Verzahnungselementes gewählt wird. Dieser Bezugspunkt läßt sich durch Abtasten des zu überprüfenden Zahnes auf einfache Art und Weise feststellen.

Es ist daher nicht erforderlich, die Lage des Meßtasters mit Hilfe der beiden Kugelbolzen und des inkrementalen Wegmeßsystems bezogen auf die Mittelachse des Verzahnungselementes zu ermitteln.

Weitere Vorteile und Ausgestaltungen der Erfindung sind Gegenstand der Unteransprüche und werden anhand der nachfolgenden Beschreibung einiger Ausführungsbeispiele und der Zeichnung näher erläutert.

In der Zeichnung zeigen

Fig. 1    eine Seitenansicht der an der Verzahnung angekoppelten Grundplatte,

Fig. 2    eine Aufsicht der Verschiebungseinrichtung,

Fig. 3    eine schematische Darstellung des Korrekturverfahrens mit Messung der Zahnlückenweite,

Fig. 4    eine schematische Darstellung des Korrekturverfahrens mit Messung der Zahnlückentiefe,

Fig. 5    eine schematische Darstellung der Ermittlung der Mittelachse eines Zahnes,

Fig. 6    eine schematische Darstellung des Meßverfahrens.

Eine Vorrichtung zur Überprüfung des Evolventenprofils eines Verzahnungselementes enthält im wesentlichen eine in X- und Y-Richtung verschiebbare Verschiebungseinrichtung 7, einen auf der verschiebungseinrichtung angeordneten, zur Abtastung des Evolventenprofils geeigneten Meßtaster 8 sowie eine Steuereinheit zur Ansteuerung der Verschiebungseinrichtung.

Das Verzahnungselement kann sowohl durch ein Zahnrad als auch durch ein Ritzel gebildet werden, die entweder gerad- oder schrägverzahnt sind.

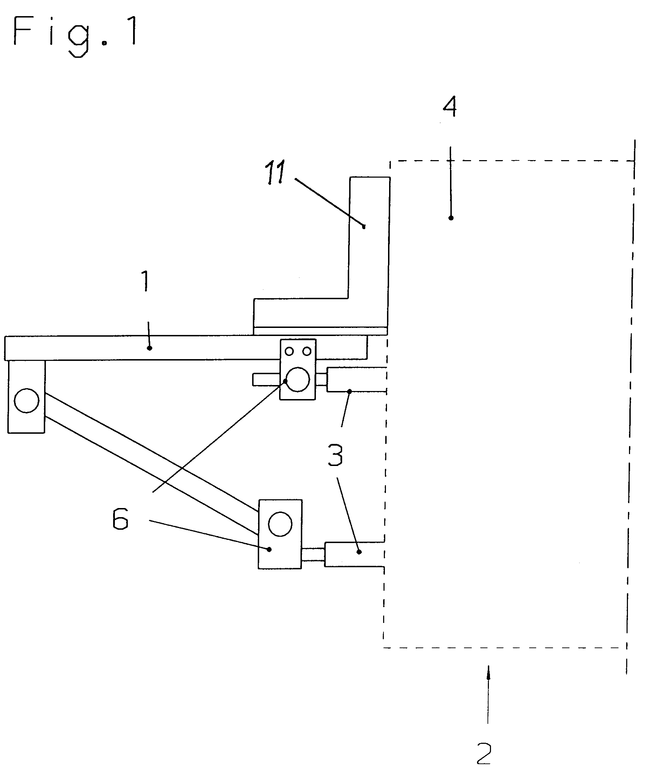

Die Verschiebungseinrichtung 7 ist auf einer in Fig. 1 dargestellten Grundplatte 1 montierbar. Diese Grundplatte ist mit einer zu überprüfenden Verzahnung 2 beispielsweise über Haftmagnete 3 koppelbar. Die einzelnen Haftmagnete können beispielsweise an Zähnen 4 der Verzahnung 2 befestigt werden. Ferner sind geeignete Verstellmittel 6 vorgesehen, um die Grundplatte, beispielsweise mit Hilfe eines Anschlagwinkels 11, senkrecht zur Achse des Verzahnungselementes 2 auszurichten.

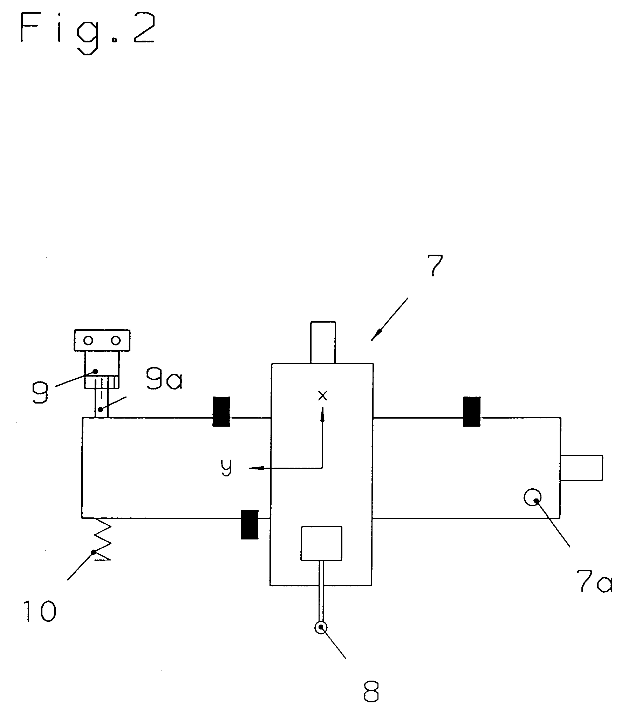

Auf dieser ausgerichteten Grundplatte 1 wird die Verschiebungseinrichtung 7 aufgesetzt, wie sie in Fig. 2 dargestellt ist. Sie wird beispielsweise durch einen allgemein bekannten Kreuzschlitten gebildet, auf dem der zur Abtastung des Evolventenprofils geeignete Meßtaster 8 angeordnet ist. Nachdem die Grundplatte 1 senkrecht zur Achse des Verzahnungselementes ausgerichtet ist, ist der Meßtaster durch die Verschiebungseinrichtung 7 in einem X/Y-Koordinatensystem beweglich, das ebenfalls senkrecht zur Achse des Verzahnungselementes ausgerichtet ist.

Der Meßtaster 8 wird in X- und Y-Richtung mittels Motoren 11 und 12 bewegt, die wiederum mit der nicht dargestellten Steuereinheit in Verbindung stehen.

Die Verschiebungseinrichtung 7 wird auf der Grundplatte 1 mittels geeigneter Klemmen 13 fixiert.

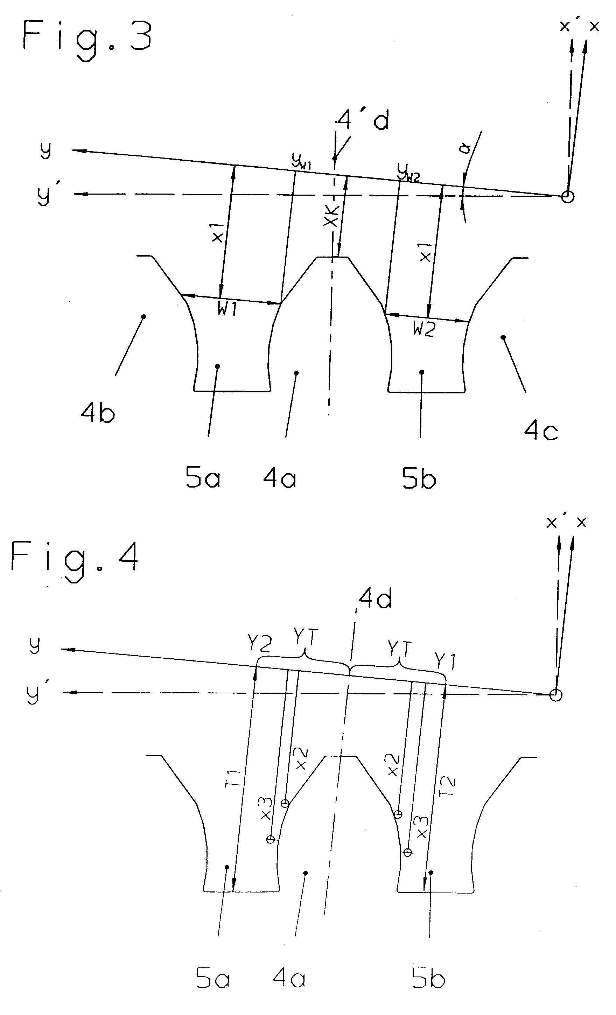

Weiterhin unbestimmt ist jedoch die Lage des X/Y-Koordinatensystems bezüglich der tatsächlichen Mittelachse 4'd eines zu überprüfenden Zahnes 4a (Fig. 3).

Um die Koordinaten einer abgetasteten Zahnflanke des Zahnes 4a mit den Koordinaten des theoretischen Evolventenprofils vergleichen zu können, muß die Lage des X/Y-Koordinatensystems bezüglich der Mittelachse 4'd des Zahnes 4 bekannt sein.

Bevor das eigentliche Verfahren zur Überprüfung des Evolventenprofils eines Verzahnungselementes näher beschrieben wird, wird anhand der Fig. 3 und 4 ein Verfahren zur Korrektur des Ausgangssignals des das Evolventenprofil des Verzahnungselementes überprüfenden Meßtasters 8 angegeben, durch das eine eventuelle Schieflage des X/Y-Koordinatensystems bezüglich der Mittelachse 4'd des zu überprüfenden Zahnes 4a berücksichtigt werden kann.

Hierbei wird in dem Ausführungsbeispiel gemäß Fig. 3 für zwei symmetrisch zur Mittelachse 4'd des zu überprüfenden Zahnes 4a liegende Zahnlücken 5a, 5b die Zahnlückenweite W in Y-Richtung gemessen. In dem dargestellten Ausführungsbeispiel ergibt sich für die Zahnlücke 5a eine Zahnlückenweite W1 und für die Zahnlücke 5b eine Zahnlückenweite W2. Bei der Messung in beiden Zahnlücken wird der Meßtaster 8 jeweils um das gleiche Maß X1 in X-Richtung zugestellt.

Das Abstandsmaß XK in X-Richtung auf der Mittelachse 4d zum Kopf des Zahnes 4a wird ebenfalls ermittelt. Die Mittelachse 4d des Zahnes 4a wird dabei durch die Antastpunkte $Y_{W1}$ und $Y_{W2}$ nach folgender Gleichung ermittelt:

$$4d = (Y_{W1} + Y_{W2}) / 2.$$

Aufgrund der gekrümmten Ausbildung der Zahnflanken ergeben sich unterschiedliche Zahnlückenweiten W1 und W2, wenn, wie in diesem Fall, eine der beiden Koordinatenrichtungen (Y-Richtung) einen Winkel $\alpha$ zur Y'-Richtung bildet, die senkrecht zur Mittelachse 4'd ausgerichtet ist. Die Differenz der beiden Meßwerte W1 und W2 wird jedoch zur Korrektur des Meßtasterausgangssignals derart verwendet, daß die Koordinaten einer abgetasteten Zahnflanke in einem X'/Y'-Koordinatensystem angegeben werden können, dessen eine Achse (Y'-Achse) senkrecht zur Mittelachse 4'd des Zahnes 4a ausgerichtet ist. Hierfür gibt es im wesentlichen zwei Vorgehensweisen:

a) entweder wird der Meßtaster 8 zusammen mit der Verschiebungseinrichtung 7 so ausgerichtet, daß der Meßtaster 8 in Y-Richtung senkrecht zur Mittelachse 4'd beweglich ist

b) oder die Korrektur besteht darin, daß die Meßtasterausgangssignale bei der Überprüfung des Evolventenprofils rechnerisch korrigiert werden.

Um beide Korrekturmöglichkeiten möglichst exakt durchführen zu können, wird das oben beschriebenen Korrekturverfahren zweckmäßigerweise wenigstens einmal unter Berücksichtigung der zuvor ermittelten Differenz der beiden Meßwerte wiederholt. Die sich dabei möglicherweise noch ergebende Differenz wird unter Berücksichtigung der zuvor ermittelten Differenz ebenfalls bei einer weiteren Durchführung des Korrekturverfahrens bzw. bei dem eigentlichen Überprüfen der Evolvente berücksichtigt. In diesem Ausführungsbeispiel wird somit der Korrekturwert des Meßtasterausgangssignales iterativ ermittelt.

Erfolgt die Korrektur durch mechanische Ausrichtung der Verschiebungseinrichtung 7, so wird diese zweckmäßigerweise schwenkbeweglich um einen Drehpunkt 7a auf der Grundplatte 1 gehaltert (siehe Fig. 2). Zum Schwenken der Verschiebungseinrichtung 7 um den Drehpunkt 7a ist eine Verstelleinrichtung 9 vorgesehen, die beispielsweise durch eine Mikrometerschraube gebildet werden kann. Der Verstelleinrichtung 9 gegenüberliegend steht eine Druckfeder 10 mit der Verschiebungseinrichtung in Wirkverbindung und hält die Verschiebungseinrichtung 7 in Anschlag mit dem Verstellbolzen 9a der Verstelleinrichtung 9. Aus der Differenz der beiden Meßwerte des Korrekturverfahrens wird ein Verstellmaß berechnet, um die Verschiebungseinrichtung 7 mit Hilfe der Verstelleinrichtung 9 derart auszurichten, daß der Meßtaster 8 in Y-Richtung senkrecht zur Mittelachse 4'd des Zahnes 4a beweglich ist.

Selbstverständlich können auch andere Verstelleinrichtungen 9, beispielsweise eine motorbetriebene Verstellspindel, vorgesehen werden.

Für die Berechnung des Winkels $\alpha$ und des Verstellmaßes gelten folgende Gleichungen:

$$\alpha = \arctan[(W1 - W2) / (2 * (X1 - XK))];$$

$$\text{Verstellmaß} = \tan(\alpha) * \text{Distanz zwischen Drehpunkt 7a und Verstellbolzen 9a}$$

Anhand der Fig. 4 wird nun ein zweites verfahren zur Korrektur des Ausgangssignales des Meßtasters 8 beschrieben. Dieses zweite Verfahren beruht darauf, daß für die zwei symmetrisch zur Mittelachse 4d des zu prüfenden Zahnes 4a liegenden Zahnlücken 5a, 5b die Zahnlückentiefe T in X-Richtung gemessen wird und die Differenz der beiden Meßwerte zur Korrektur des Meßtasterausgangssignales verwendet wird.

Um exakt in der Mitte der beiden Zahnlücken messen zu können, ist es erforderlich, zunächst die Mittelachse 4d des Zahnes 4a zu ermitteln. Zu diesem Zweck werden die beiden Zahnflanken des Zahnes 4a an jeweils zwei Punkten in zwei unterschiedliche Höhen X2, X3 vermessen. Aus den sich ergebenden vier Koordinatenpunkten wird die Mittelachse 4d ermittelt, die senkrecht zur momentanen Y-Achse verläuft.

Aus den bekannten Verzahnungsdaten für das zu überprüfende Verzahnungselement, wie Modul, Zähnezahl, Kopfkreisdurchmesser, wird der Abstand YT zwischen der Mittelachse 4d und der Mitte einer benachbarten Zahnlücke 5a, 5b berechnet.

Zur Ermittlung der Zahnlückentiefe wird der Meßtaster 8 um den vorgegebenen bzw. berechneten Wert YT auf beide Seiten der Mittelachse 4d verschoben, um dann in X-Richtung die Zahnlückentiefen T1 und T2 der beiden Zahnlücken 5a, 5b zu messen.

Aus den beiden gemessenen Zahnlückentiefen T1, T2 und den beiden Punkten Y1, Y2, die einen Abstand von YT von der Mittelachse 4d aufweisen, läßt sich wiederum die erforderliche Korrektur berechnen. Die eigentliche Korrektur kann dabei wiederum sowohl durch eine mechanische Ausrichtung als auch durch eine rechnerische Kompensierung erfolgen.

Für die Berechnung des Winkels $\alpha$ und des Verstellmaßes gelten folgende Gleichungen:

$$\alpha = \arctan[(T1 - T2) / (Y2 - Y1)];$$

$$\text{Verstellmaß} = \tan(\alpha) * \text{Distanz zwischen Drehpunkt 7a und Verstellbolzen 9a.}$$

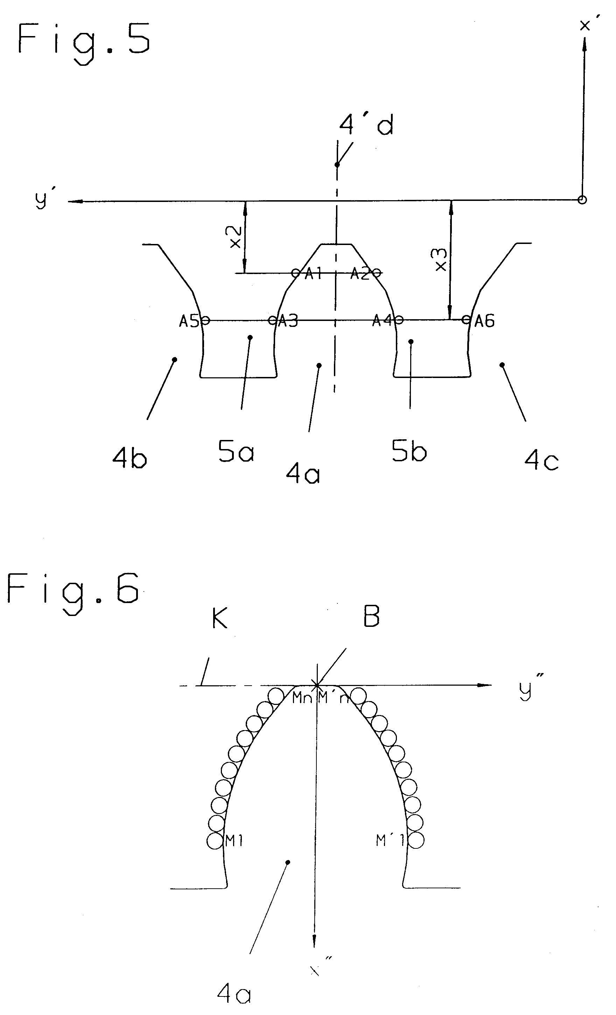

Für das erfindungsgemäße Verfahren zur Überprüfung des Evolventenprofils eines Verzahnungselementes wird sowohl für die Ermittlung der Koordinaten der abgetasteten Zahnflanke als auch für die Koordinaten des theoretischen Evolventenprofils von einem Bezugspunkt ausgegangen, der durch den Schnittpunkt der Mittelachse 4'd eines Zahnes 4a festgelegt ist. Dies bedeutet, daß vor dem Abtasten der Zahnflanken die Mittelachse 4'd des Zahnes 4a bestimmt werden muß. Bei dem zuvor anhand der Fig. 3 und 4 beschriebenen Korrekturverfahren wurden bereits die für die Bestimmung der Mittelachse notwendigen Koordinatenpunkte abgetastet. Nachdem jedoch dieses Korrekturverfahren nicht notwendigerweise zusammen mit dem erfindungsgemäßen Meßverfahren angewendet werden muß, wird im folgenden anhand der Fig. 5 und 6 das Verfahren zur Ermittlung der Mittelachse des Zahnes 4a erläutert.

Grundvoraussetzung für die Bestimmung der Mittelachse ist die Kenntnis der Lage des senkrecht zur Achse des Verzahnungselementes ausgerichteten X/Y-Koordinatensystems, in dem der Meßtaster 8 beweglich ist. In dem Ausführungsbeispiel gemäß Fig. 5 wird angenommen, daß die Y'-Achse dieses Koordinatensystems senkrecht zur Mittelachse des zu prüfenden Zahnes 4a ausgerichtet ist. Selbstverständlich kann das Koordinatensystem auch mit einem bekannten Winkel zu dieser Mittelachse ausgerichtet sein. Es muß jedoch in jedem Fall gewährleistet sein, daß der Meßtaster so angesteuert werden kann, daß er senkrecht zur Mittelachse verschiebbar ist.

Die Bestimmung der Mittelachse 4'd des Zahnes 4a könnte beispielsweise dadurch erfolgen, daß der Zahn in einer Höhe X2 an beiden Zahnflanken angetastet wird. Dabei ergeben sich zwei Antastpunkte A1 und A2 mit den Koordinaten $(X2, Y_{A1})$ und $(X2, Y_{A2})$. Durch Mittelung dieser beiden Koordinaten ergibt sich für die Mittelachse 4'd folgende Gleichung:

$$Y' = (Y_{A1} + Y_{A2}) / 2$$

Um ggf. in der Höhe X2 an den Zahnflanken vorhandene starke Unregelmäßigkeiten auszugleichen, wird man die beiden Zahnflanken zweckmäßigerweise auch in einer zweiten Höhe X3 antasten und die sich ergebenden Antastpunkte A3, A4 bei der Ermittlung der Mittelachse 4'd berücksichtigen. In diesem Fall würde die Mittelachse wie folgt bestimmt:

$$Y' = (Y_{A1} + Y_{A2} + Y_{A3} + Y_{A4}) / 4$$

Eine weitere Möglichkeit zur Ermittlung der Mittelachse eines Zahnes 4a besteht darin, sowohl die Zahnflanken dieses Zahnes in einer bestimmten Höhe X3 als auch die jeweils gegenüberliegenden Zahnflanken der benachbarten Zähne 4b, 4c in der gleichen Höhe X3 abzutasten. Dabei ergeben sich wiederum vier Abtastpunkte A3, A4, A5 und A6, aus deren Y-Koordinaten sich die Mittelachse wie folgt berechnet:

$$Y' = (Y_{A3} + Y_{A4} + Y_{A5} + Y_{A6}) / 4$$

Um den Bezugspunkt, d. h. den Schnittpunkt von Mittelachse und Kopfkreis K abzuspeichern, wird der Meßtaster 8 durch Verfahren auf der Mittelachse mit dem Zahn 4a in Berührung gebracht. Dieser Berührungspunkt bildet den Bezugpunkt B, der gleichzeitig den Nullpunkt des X"/Y"-Koordinatensystems darstellt, dessen X"-Achse in Richtung der Mittelachse 4'd verläuft (siehe Fig. 6).

Ausgehend von diesem Bezugspunkt B werden die Koordinaten des theoretischen Evolventenprofils aus den allgemein bekannten Verzahnungsdaten (Modul, Kopfkreisdurchmesser, Zähnezahl, etc.) des zu überprüfenden Verzahnungselementes 2 berechnet.

Nachdem diese Ausrichtung abgeschlossen ist, erfolgt die eigentliche Messung der Zahnforn. Dabei fährt der Meßtaster 8 in vorgegebenen Schritten die linke und rechte Zahnflanke des zu überprüfenden Zahnes 4a ab und übermittelt einem Rechner die Koordinaten der Antastpunkte (M1 ... Mn, M'1 ... M'n).

Die ermittelten Koordinaten der Zahnform werden zunächst im Rechner gespeichert. Die Berechnung der Abweichungen von den Koordinaten des theoretischen Evolventenprofils erfolgt mittels Rechner über ein Berechnungs- und Auswerteprogramm. Die ermittelten Abweichungen können graphisch in Diagrammform dargestellt und ggf. auf einem angeschlossenen Drucker ausgegeben werden.

Bei der Abtastung der Zahnflanken ist zudem der Durchmesser der Meßkugel des Meßtasters 8 zu berücksichtigen. Der Abstand vom Mittelpunkt der Meßkugel zum Berührungspunkt an der Zahnflanke läßt sich aus den allgemeinen Verzahnungsdaten und den daraus ableitbaren Winkeln berechnen.

Das erfindungsgemäße Verfahren zur Überprüfung des Evolventenprofils eines Verzahnungselementes läßt sich besonders vorteilhaft mit dem oben beschriebenen Korrekturverfahren anwenden. So wird bei dem Korrekturverfahren gemäß Fig. 4 die Mittelachse unmittelbar berechnet, die unter Berücksichtigung der ermittelten Korrektur des Meßtasterausgangssignales unmittelbar für das Meßverfahren verwendet werden kann. Nach Durchführung des Korrekturverfahrens gemäß der Fig. 3 können zur Überprüfung nochmals die Strecken W1 und W2 ermittelt werden, wobei sich die Punkte A3, A4, A5 und A6 gemäß Fig. 5 ergeben.

Im Gegensatz zum Stand der Technik benötigt das erfindungsgemäße Verfahren zur Überprüfung des Evolventenprofils eines Verzahnungselementes keine relativ weit auseinander liegenden Kugelbolzen, die sich am Verzahnungselement abstützen. So ist es mit dem erfindungsgemäßen Verfahren möglich, ein Meßgerät zu schaffen, das sich durch ein geringes Transportgewicht und -volumen auszeichnet.

## Patentansprüche

1. Verfahren zur Überprüfung des Evolventenprofils eines Verzahnungselementes (2), wobei ausgehend von einem Bezugspunkt (B) wenigstens eine Zahnflanke eines zu überprüfenden Zahnes (4a) mit einem Meßtaster (8) abgetastet wird und die dabei ermittelten Koordinaten (M1 ... Mn, M'1 ... M'n) mit den Koordinaten des theoretischen Evolventenprofils verglichen werden,
dadurch gekennzeichnet, daß der Bezugspunkt als Schnittpunkt der Mittelachse (4'd) des Zahnes (4a) mit dem Kopfkreis (K) des Verzahnungselementes (2) gewählt wird.

2. Verfahren nach Anspruch 1, dadurch gekennzeichnet, daß zur Ermittlung der Mittelachse (4'd) eines Zahnes (4a) die Zahnflanken symmetrisch zu beiden Seiten der Mittelachse angetastet werden.

3. Verfahren nach Anspruch 2, dadurch gekennzeichnet, daß die Zahnflanken des zu überprüfenden Zahnes (4a) in wenigstens zwei unterschiedlichen Höhen (X2, X3) angetastet werden und aus den ermittelten Koordinaten die Mittelachse (4'd) berechnet wird.

4. Verfahren nach Anspruch 2, dadurch gekennzeichnet, daß zur Ermittlung der Mittelachse (4'd) des Zahnes (4a) sowohl die beiden Zahnflanken dieses Zahnes in einer bestimmten Höhe (X3) als auch die jeweils gegenüberliegenden Zahnflanken der benachbarten Zähne (4b, 4c) in der gleichen Höhe (X3) angetastet werden und aus den ermittelten Koordinaten die Mittelachse berechnet wird.

5. Verfahren nach Anspruch 1, bei dem ein Meßtaster (8) in einem senkrecht zur Achse des Verzahnungselementes (2) angeordneten X/Y-Koordinatensystem beweglich ist, dadurch gekennzeichnet, daß zunächst für zwei symmetrisch zur Mittelachse (4'd) eines zu prüfenden Zahnes (4a) liegende Zahnlücken (5a, 5b) die Zahnlückentiefe (T1, T2) in X-Richtung und/oder die Zahnlückenweite (W1, W2) in Y-Richtung gemessen wird und die Differenz der beiden Meßwerte zur Korrektur des Meßtasterausgangssignales verwendet wird.

6. Verfahren nach Anspruch 5, dadurch gekennzeichnet, daß die Korrektur darin besteht, daß der Meßtaster (8) in Y-Richtung senkrecht zur Mittelachse (4'd) des zu prüfenden Zahnes (4a) ausgerichtet wird.

7. Verfahren nach Anspruch 5, dadurch gekennzeichnet, daß die Meßtasterausgangssignale bei der Überprüfung des Evolventenprofils rechnerisch korrigiert werden.

8. Verfahren nach Anspruch 5, dadurch gekennzeichnet, daß das Korrekturverfahren wenigstens einmal unter Berücksichtigung der zuvor ermittelten Differenz wiederholt wird.

# Fig.1

# Fig.2

# Fig.3

# Fig.4

Fig.5

4´d

y´

x2

x3

x´

○A1   A2○

A5○   ○A3        A4○   ○A6

4b    5a        5b    4c

4a

Fig.6

K        B

y´´

Mn M´n

M1        M´1

x´´

4a